# EUROPEAN PATENT APPLICATION

(11) **EP 3 447 246 A1**
(43) Date of publication of application: **27.02.2019**
(21) Application number: 18189501.2
(22) Date of filing: 17.08.2018
(51) Int. Cl.: F01D 9/02, F01D 11/00

(54) **GAS TURBINE**

(30) Priority: 25.08.2017 JP 2017162711
(71) Applicant: Mitsubishi Hitachi Power Systems, Ltd., Yokohama-shi, Kanagawa 220-8401 (JP)
(72) Inventor: OKAZAKI, Hirofumi, Yokohama-shi,, Kanagawa 220-8401 (JP); MIURA, Keisuke, Yokohama-shi,, Kanagawa 220-8401 (JP)
(74) Representative: MERH-IP Matias Erny Reichl Hoffmann Patentanwälte PartG mbB

(57) **Abstract**

A gas turbine has a sealing structure at a connection portion between the transition pieces 25 and a turbine inlet portion 3a. A frame 42 of the transition piece has an inner frame portion 43 extending in the circumferential direction, an outer frame portion 44 situated radially outside the inner frame portion, and a pair of side frame portions 45 provided between both side end portions of the inner frame portion and the outer frame portion. The sealing structure includes an inner circumferential seal member 52 and an outer circumferential seal member 53 for sealing a gap between the inner frame portion and the outer frame portion and the turbine inlet portion, a side seal member 51 for sealing a gap between the adjacent side frame portions, a first obstacle 61 arranged in a gap between first corner portions 47 adjacent to each other, and a second obstacle 62 arranged in a gap between second corner portions 48 adjacent to each other. The first obstacle and the second obstacle are in contact with the side seal member at the side of the turbine inlet portion.

## Description

### BACKGROUND OF THE INVENTION

### 1. Field of the Invention

The present invention relates to a gas turbine and, more specifically, to a gas turbine which has a sealing structure at a connection portion between the outlet side end portions of tail portions of a plurality of combustors arranged in an annular fashion and the inlet portion of the turbine.

### 2. Description of the Related Art

Among various types of gas turbines, there exists a so-called multi-can type gas turbine equipped with a plurality of gas turbine combustors (hereinafter referred to as the combustors) each of which individually has a combustion chamber where combustion gas is generated. In the multi-can type gas turbine, there are usually arranged in an annular fashion a plurality of combustors on the outer side of the rotation shaft of the gas turbine. Each combustor includes a cylindrical combustion liner having a combustion chamber therein and a transition piece for guiding a high temperature and high pressure combustion gas generated in the combustion chamber to the inlet of the turbine. The transition piece connects the combustion chamber having a circular cross-section inside the combustion liner to the turbine inlet flow path having an annular shape in flow path cross-section. Thus, the transition piece has a circular upstream side cross section in correspondence with the cylindrical combustion liner, and has a downstream side cross-section with a shape obtained by dividing an annular shape corresponding to the configuration of the turbine inlet flow path having the annular flow path cross-section into a plurality of sections in the circumferential direction, in other words, an approximately rectangular (fan-shaped) downstream side cross-section formed by inner and outer arcs and straight lines connecting both end portions of both arcs. The transition piece forms a flow path connecting between the upstream side cross-section and the downstream side cross-section by a smooth curve.

In a gas turbine, generally speaking, in order to shorten the rotation shaft, it is common practice to arrange the combustors on the outer circumferential side of the compressor to diminish the distance between the compressor and the turbine. In the case of such a structure, the combustion air (compressed air) from the compressor passes outside the transition piece of the combustor, turns to the head portion side (combustion chamber side) of the combustor, and flows outside the combustion liner. The combustion air changes the flowing direction again at the head portion of the combustor, and then flows into the interior (combustion chamber) of the combustion liner. That is, combustion gas flows on the inner side of the connection portion between the transition piece of the combustor and the turbine inlet flow path, whereas combustion air flows on the outer side of the connection portion. This combustion air is of higher pressure than the combustion gas flowing on the inner side of the connection portion, so that it is allowed to flow from the outer circumferential side to the inner side at the connection portion (allowed to leak). In this case, the fuel consumption increases due to the reduction in the temperature of the combustion gas and the fluctuations in the combustion condition at the combustor, resulting in deterioration in the energy efficiency of the gas turbine. Further, due to the leakage of the combustion air, the amount of air contributing to the combustion is reduced, so that the combustion temperature in the combustion chamber is raised, and there is a fear of an increase in the amount of nitrogen oxides generated at the time of combustion. Thus, there is a demand for suppressing the leakage of the combustion air.

JP-2003-193866-A discloses an example of sealing structures for suppressing the leakage of the combustion air at the connection portion between the transition pieces of the combustors and the turbine inlet. In the technique disclosed in JP-2003-193866-A, a sealing plate is arranged at each of the four side portions (four boundaries) of a part called the frame which is of an approximately rectangular shape and which is attached to the outlet side end portion (rearmost portion) of the transition piece of each combustor. More specifically, a sealing plate is arranged at each of the following portions: an arcuate inner circumferential portion (lower side portion) extending in the circumferential direction; an arcuate outer circumferential portion (upper side portion) situated radially outside the inner circumferential portion and extending in the circumferential direction; and a pair of linear side portions connecting both end portions of the inner circumferential portion and both end portions of the outer circumferential portion and extending in the radial direction. More specifically, a sealing groove is provided in the outer circumferential surface of each frame, and a flat sealing plate called the side seal plate is held between the sealing grooves of the side portions of the adjacent frames to seal the gap between the frames. Further, a sealing plate called the floating seal plate is fitted in the sealing groove of the inner circumferential portion or the outer circumferential portion of the frame and a sealing groove provided at the turbine inlet (first stage nozzle) to seal the gap between the transition piece and the turbine inlet. The floating seal plate is composed of a portion with a U-shaped cross-section, and a portion with a linear cross-section protruding toward the turbine side from the portion with a U-shaped cross-section. The portion with a U-shaped cross-section is fixed to the frame, and the portion with a linear cross-section is fitted in the sealing groove at the turbine inlet.

Further, WO2007/023734-A discloses an example of sealing structures for suppressing leakage of the combustion air from between the transition pieces at the connection portion between the outlet side end portions of the transition pieces of a plurality of combustors and the turbine inlet. The sealing structure disclosed in WO2007/023734-A maintains a satisfactory sealing performance even in the case where relative displacement is caused between the transition pieces due to the thermal deformation attributable to difference in temperature between structures of the combustors under high temperature and due to the vibration accompanying the circulation of the working fluid.

### SUMMARY OF THE INVENTION

In combustors and a turbine, combustion gas of high temperature is circulated, so that there is a great difference in temperature between the condition when a gas turbine is at rest and the condition when it is operating. Thus, relative positions between the components constituting the combustors and the turbine undergo a change due to their thermal deformation. Further, in the gas turbine, there is likely to be generated a vibration accompanying the rotation of the gas turbine and the circulation of the working fluid. Also due to such vibration, relative positions between the components constituting the combustors and the turbine undergo a change.

Thus, as in the technique disclosed in WO2007/023734-A, the sealing plates used in the sealing structure at the connection portion between the combustor transition pieces and the turbine inlet are required to have high heat resistance, rigidity, and durability taking into account the use in a high temperature environment. Further, the sealing plates are also required to have flexibility such that the sealing plates can secure the sealing performance following the positional change of the transition pieces and the turbine inlet. That is, two mutually incompatible characteristics of rigidity and flexibility are required of the sealing plates of this sealing structure.

In the sealing structure disclosed in JP-2003-193866-A, a sealing plate is arranged at each of the four side portions of the approximately rectangular frame, and a gap is provided between each sealing plate and the portion (sealing groove) in which each sealing plate is fitted taking into account the thermal deformation, and the size of the gap is adjusted, and the flow path is complicated through a combination of the sealing plate and the sealing groove, thereby endowing the structure with a sealing performance.

Further, in the case where a sealing plate is arranged at each of the four side portions of the frame as the sealing structure disclosed in JP-2003-193866-A, it is necessary to avoid interference between the sealing plates such that each sealing plate can maintain its sealing performance even if thermal deformation is generated in the combustors, etc. Thus, at the four corner portions of the frame where the sealing plates cross each other (the sealing plates are combined with each other), it is necessary to offset the sealing positions of the sealing plates from each other. For example, a distance (offset) in the axial direction of the gas turbine is provided between the sealing plates (floating seal plates) arranged at the inner circumferential portion and the outer circumferential portion of the frame and the sealing plates (side seal plates) arranged at the side portions of the frame. In this case, even if the adjacent transition pieces are relatively displaced in the axial direction of the rotation shaft due to the thermal deformation or the like, the side seal plates and the floating seal plates do not interfere with each other because of the offset. Thus, even in the case where thermal deformation is generated, each sealing plate is solely in charge of each side portion of the frame, so that it is possible to maintain the sealing performance for each side portion of the frame.

In this way, in the portions where the side seal plates and the floating seal plates cross each other at the corner portions of the frame, it is necessary to provide a gap (distance) for avoiding interference between the sealing plates. However, the combustion air flowing outside the transition pieces is allowed to flow from the gap into the turbine inlet flow path via a gap formed between the adjacent frame corner portions.

In the case where the side seal plate and the floating seal plate are connected together with a view to preventing leakage of combustion air from the gaps between the frame corner portions, the followability of each sealing plate with respect to displacements of the combustors and the turbine due to the thermal deformation is lost. As a result, the sealing performance at the four side portions of the frame deteriorates.

Usually, the side seal plate is displaced in accordance with relative displacement of two combustors as objects to be sealed due to thermal deformation. For example, in the case where the relative position of the adjacent combustors is greatly changed in the axial direction, the sealing grooves of the frames of the transition pieces are mutually deviated in the axial direction, and a gap is likely to be caused between the side seal plate and the sealing groove. To cope with this, there is provided so-called "play" for adjusting the gap between the side seal plate and the sealing groove and for allowing a positional change of the side seal plate. Due to the difference in pressure between the combustion air and the combustion gas acting on each surface of the flat side seal plate, the side seal plate moves and is pressed against the opposite sealing groove, whereby the sealing performance of the side seal plate is maintained.

However, in the case where the side seal plates and the floating seal plates are connected together with a view to preventing leakage of combustion air from the gap between the frame corner portions of the adjacent transition pieces, the side seal plate is constrained by the floating seal plates and cannot be displaced, resulting in generation of a space between the side seal plate and the opposite sealing groove. As a result, the sealing performance of the side seal plate deteriorates. In this case, a force is also applied to the floating seal plates constraining the displacement of the side seal plate, and, in some cases, a space is also generated between the floating seal plate and the opposite sealing groove. As a result, the sealing performance of the floating seal plate also deteriorates.

The amount of air leaking from the four corner portions of the frame of the transition piece is relatively small as compared with the amount of air leaking from the four side portions of the frame. Thus, conventionally, the sealing performance at the four corner portions of the frame has not been regarded as important. However, from the viewpoint of achieving an improvement in energy efficiency and an improvement in combustion performance of the gas turbine, it is further required to reduce in leakage air at the connection portion between the outlet side end portions of the transition pieces of the combustors and the turbine inlet portion.

The present invention has been made in order to solve the above problem. It is an object of the present invention to provide a gas turbine which, even if there is caused relative displacement between components of a plurality of combustors and a turbine, can enhance the sealing performance at the connection portion between the outlet side end portions of the transition pieces of the combustors and the turbine inlet portion.

The present application includes a plurality of means for solving the above problem, an example of which is a gas turbine having a sealing structure at a connection portion between transition pieces of a plurality of gas turbine combustors arranged in an annular fashion and a turbine inlet portion forming a turbine inlet flow path with an annular cross-section. Each of the transition pieces has a frame surrounding an outer circumference at an outlet side end portion thereof. The frame includes an inner frame portion extending in a circumferential direction, an outer frame portion situated radially outside the inner frame portion and extending in the circumferential direction, and a pair of side frame portions each provided between both side end portions of the inner frame portion in the circumferential direction and both side end portions of the outer frame portion in the circumferential direction and extending in the radial direction. The sealing structure includes an inner circumferential seal member extending along the inner frame portion and configured to seal a gap between the inner frame portion and the turbine inlet portion, an outer circumferential seal member extending along the outer frame portion and configured to seal a gap between the outer frame portion and the turbine inlet portion, and a side seal member extending along a side frame portion of the pair of side frame portions and configured to seal a gap between side frame portions of adjacent frames among the frames. The sealing structure further includes a first obstacle arranged in a gap between first corner portions of the inner frame portions and the side frame portions of the adjacent frames, and a second obstacle arranged in a gap between second corner portions of the outer frame portions and the side frame portions of the adjacent frames. The first obstacle and the second obstacle are each in contact with the side seal member at a side of the turbine inlet portion.

According to the present invention, the first obstacle and the second obstacle are respectively arranged in the gap between the first corner portions and in the gap between the second corner portions of the frames of the adjacent transition pieces, with the first obstacle and the second obstacle being in contact with the side seal member, so that even if there is caused a relative displacement between the components of the combustors and the turbine, it is possible to suppress leakage into the turbine inlet flow path from the gap between the first corner portions and the gap between the second corner portions of the frame. Thus, it is possible to enhance the sealing performance at the connection portion between the outlet end portions of the transition pieces of the combustors and the turbine inlet portion. As a result, the energy efficiency and the combustion performance of the gas turbine are improved.

Other problems, structures, and effects will become apparent from the following description of an embodiment.

### BRIEF DESCRIPTION OF THE DRAWINGS

Fig. 1 is a schematic diagram illustrating a gas turbine according to a first embodiment of the present invention;
Fig. 2 is a diagram illustrating an arrangement of transition pieces of combustors constituting the gas turbine according to the first embodiment of the present invention as seen from the upstream side in the combustion gas flowing direction;
Fig. 3 is a perspective view of a transition piece of a combustor and a sealing structure at an outlet side end portion of the transition piece constituting the gas turbine according to the first embodiment of the present invention;
Fig. 4 is a cross-sectional view, as seen from the direction of the arrow line IV-IV, of the sealing structure at the outlet side end portions of the transition pieces of the gas turbine according to the first embodiment of the present invention shown in Fig. 3;
Fig. 5 is a cross-sectional view, as seen from the direction of the arrow line V-V, of the sealing structure at the outlet side end portions of the transition pieces of the gas turbine according to the first embodiment of the present invention shown in Fig. 3;
Fig. 6 is a perspective view of part of frame corner portions of the transition pieces in the sealing structure at the outlet side end portions of the transition pieces of the gas turbine according to the first embodiment of the present invention;
Fig. 7 is a perspective view, as seen from another direction, of the sealing structure at the outlet side end portions of the transition pieces of the gas turbine according to the first embodiment of the present invention with the inner circumferential seal member and the outer circumferential seal member removed;
Fig. 8 is an explanatory view illustrating leakage in a conventional sealing structure at outlet side end portions of transition pieces;
Fig. 9 is an explanatory view illustrating the operation of the sealing structure at the outlet side end portions of the transition pieces of the gas turbine according to the first embodiment of the present invention with the inner circumferential seal members and the outer circumferential seal members removed;
Fig. 10 is a cross-sectional view illustrating an example of the obstacle constituting a part of the sealing structure at the outlet side end portions of the transitions piece of the gas turbine according to the first embodiment of the present invention;
Fig. 11 is a cross-sectional view illustrating how the obstacle shown in Fig. 10 is joined to a side seal member;
Fig. 12 is a diagram illustrating the sealing structure of the gas turbine according to the first embodiment of the present invention shown in Fig. 9 as seen from the outer circumferential side;
Fig. 13 is an explanatory view illustrating the positional change of the sealing member at the time of relative displacement between the transition pieces in the sealing structure of the gas turbine according to the first embodiment of the present invention shown in Fig. 12; and Fig. 14 is a cross-sectional view illustrating an obstacle constituting a part of a sealing structure at outlet side end portions of transition pieces in a gas turbine according to a modification of the first embodiment of the present invention.

### DESCRIPTION OF THE PREFERRED EMBODIMENTS

In the following, gas turbines according to embodiments of the present invention will be described with reference to the drawings.

### [First Embodiment]

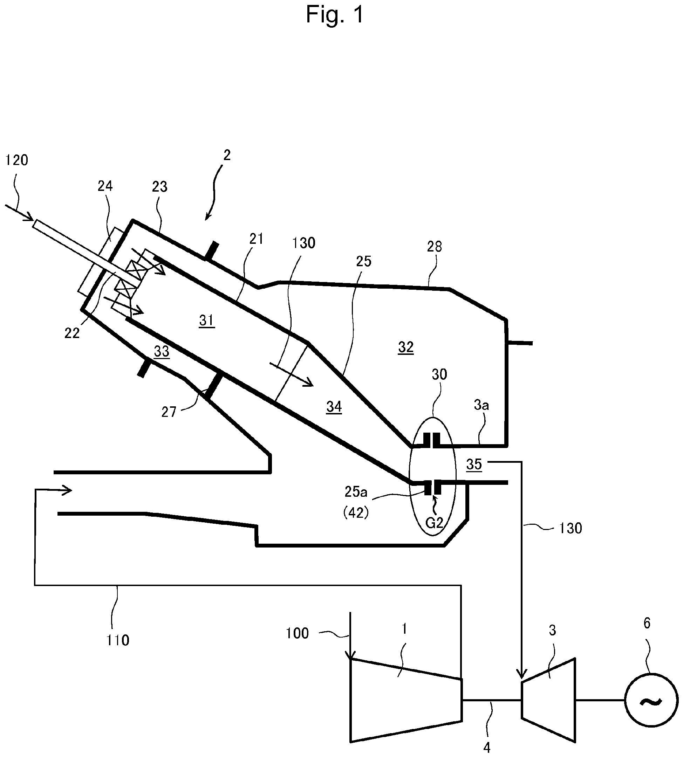

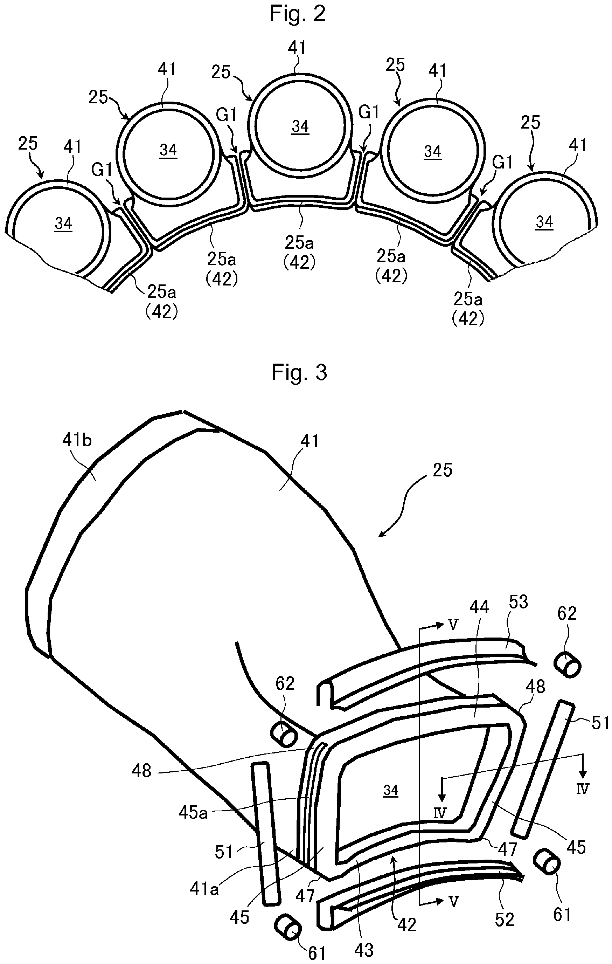

First, a structure of a gas turbine of a first embodiment of the present invention will be described with reference to Figs. 1 and 2. Fig. 1 is a schematic diagram illustrating the gas turbine according to the first embodiment of the present invention. Fig. 2 is a diagram illustrating an arrangement of transition pieces of combustors constituting the gas turbine according to the first embodiment of the present invention as seen from the upstream side in the combustion gas flowing direction. In Fig. 1, the left-hand side of the combustor illustrated is the upstream side of the combustion gas, and the right-hand side thereof is the downstream side of the same.

In Fig. 1, the gas turbine includes a compressor 1 which takes in ambient air 100 and compresses it to generate high pressure combustion air 110, a plurality of combustors 2 (of which only one is shown in Fig. 1) which combust a mixture of the combustion air (compressed air) 110 introduced from the compressor and a fuel 120 supplied from a fuel system (not shown) to generate a high temperature combustion gas 130, and a turbine 3 which obtains a shaft drive force by the energy of the combustion gas 130 generated in the combustors 2. The compressor 1 and the turbine 3 are connected to each other by a drive shaft 4. A generator 6 is mechanically connected to the gas turbine, and the generator 6 converts the shaft drive force of the turbine 3 to electric power.

The plurality of combustors 2 are arranged in an annular fashion on the outer circumferential side of the compressor 1 (the drive shaft 4). That is, the present gas turbine is a multi-can type gas turbine. Each combustor 2 is arranged such that the head portion thereof is situated on the compressor 1 side (the left-hand side in Fig. 1) and that the tail portion thereof is situated on the turbine 3 side (the right-hand side in Fig. 1). The combustor 2 includes a substantially cylindrical liner 21 having a combustion chamber 31 therein, a fuel nozzle 22 for injecting fuel into the liner 21, an outer circumferential partition wall 23 as a pressure container containing the liner 21, an end cover 24 closing an opening on the fuel nozzle 22 side of the outer circumferential partition wall 23, and a transition piece 25 connecting the liner 21 with an inlet portion 3a of the turbine 3 and being configured to guide the combustion gas 130 generated in the combustion chamber 31 to the turbine 3. The outer circumferential partition wall 23 is attached to a casing 28. The casing 28 accommodates the transition piece 25. Inside the casing 28, there is formed a space 32 into which the combustion air 110 flows from the compressor 1. Between the outer circumferential partition wall 23 and the liner 21, there is formed an annular air flow path 33 through which the combustion air 110 in the space 32 of the casing 28 circulates. For example, the liner 21 is fixed to the casing 28 by a fixation member 27.

The combustion air 110 from the compressor 1 reverses the flowing direction within the casing 28, and passes through the air flow paths 33 to flow toward the end covers 24 side. Then, it reverses the flowing direction again at the end covers 24 to flow into the combustion chambers 31 in the liners 21. The combustion air 110 having flowed into the combustion chambers 31 is mixed with the fuel 120 supplied from the fuel system (not shown) and is burned, with the result that the combustion gas 130 is generated. The combustion gas 130 flows into the inlet portion 3a of the turbine 3 via the transition pieces 25.

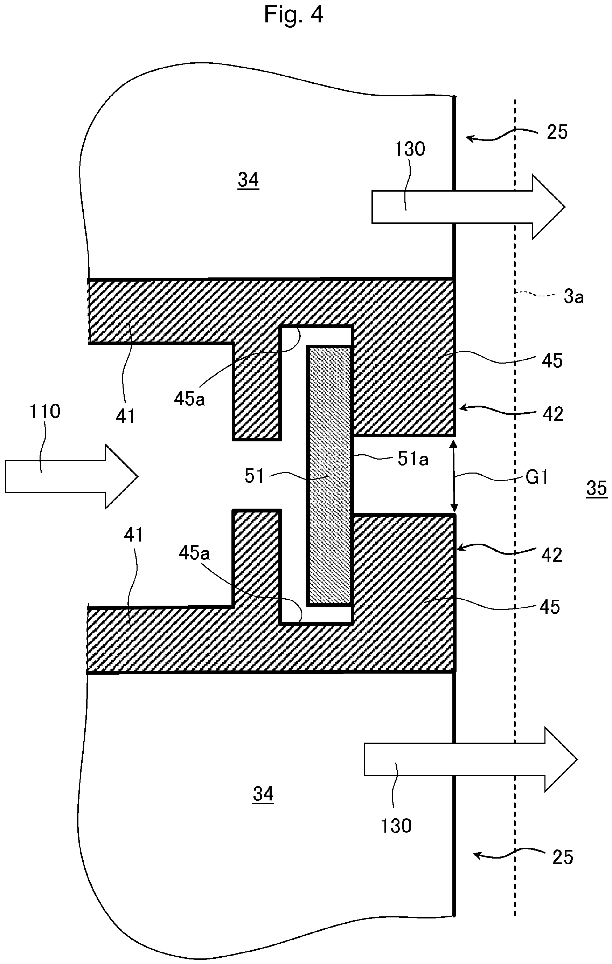

The inlet portion 3a of the turbine 3 forms a turbine inlet flow path 35 having an annular flow path cross-section. As shown in Fig. 2, in a multi-can type gas turbine, the transition pieces 25 of the plurality of combustors 2 are arranged in an annular fashion, whereby connection to the annular turbine inlet flow path 35 is effected. Each transition piece 25 thermally expands in the circumferential direction, the axial direction, and the radial direction when having a rise in temperature with the circulation of the combustion gas 130 during the operation of the gas turbine. In view of this, gaps G1 (see Fig. 4 described later) are provided between outlet side end portions 25a of the adjacent transition pieces 25, whereby interference between the outlet side end portions 25a of the transition pieces 25 due to thermal expansion is prevented.

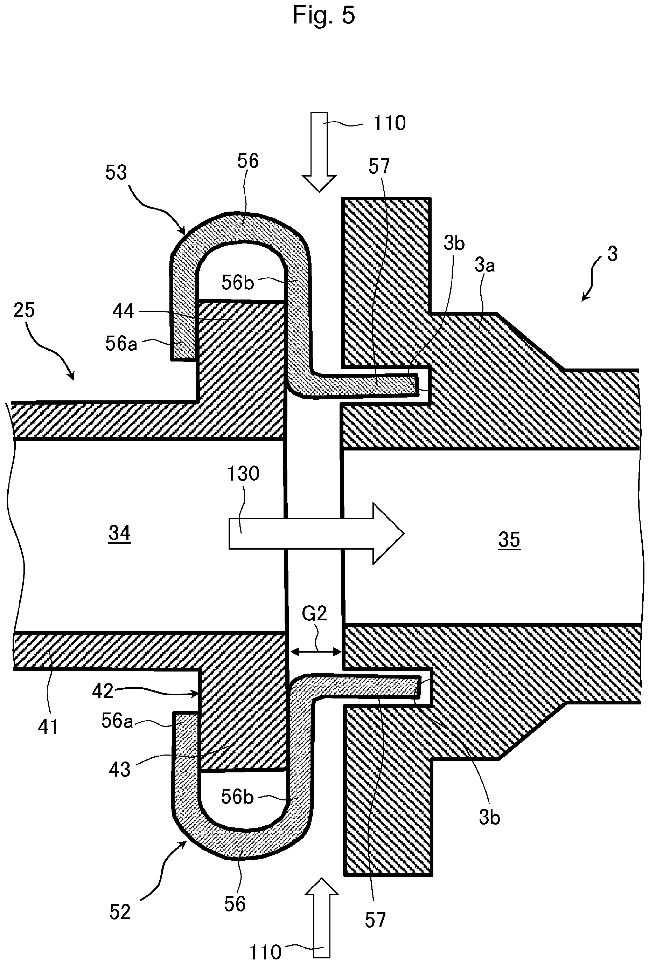

As shown in Fig. 1, the liner 21 is fixed to the casing 28, and when having a rise in temperature with the circulation of the combustion air 110 and the combustion gas 130, the liner 21 expands in the direction toward the transition piece 25 on the combustion gas downstream side of the liner 21. In view of this, a gap G2 (see Fig. 5 described later) is provided between the outlet side end portion 25a of the transition piece 25 and the turbine inlet portion 3a on the downstream side of the transition piece 25, whereby interference between the transition piece 25 and the turbine inlet portion 3a due to thermal expansion is prevented.

In this way, the gaps G1 are provided between the outlet side end portions 25a of the adjacent transition pieces 25. Further, the gaps G2 are provided between the outlet side end portions 25a of the transition pieces 25 and the turbine inlet portion 3a on the downstream side. However, the combustion air 110 is circulated in the space 32 in the casing 28 containing the plurality of transition pieces 25, whereas the combustion gas 130 is circulated inside the transition pieces 25 and the turbine inlet portion 3a. The combustion air 110 in the space 32 of the casing 28 is higher in pressure than the combustion gas 130, so that part thereof does not flow toward the liner 21 side but flows (leaks) into the turbine inlet flow path 35 side via the gaps G2 between the outlet side end portions 25a of the transition pieces 25 and the turbine inlet portion 3a, and via the gaps G1 between the outlet side end portions 25a of the adjacent transition pieces 25. In view of this, a sealing structure 30 is provided at a connection portion between the outlet side end portions 25a of the transition pieces 25 and the turbine inlet portion 3a.

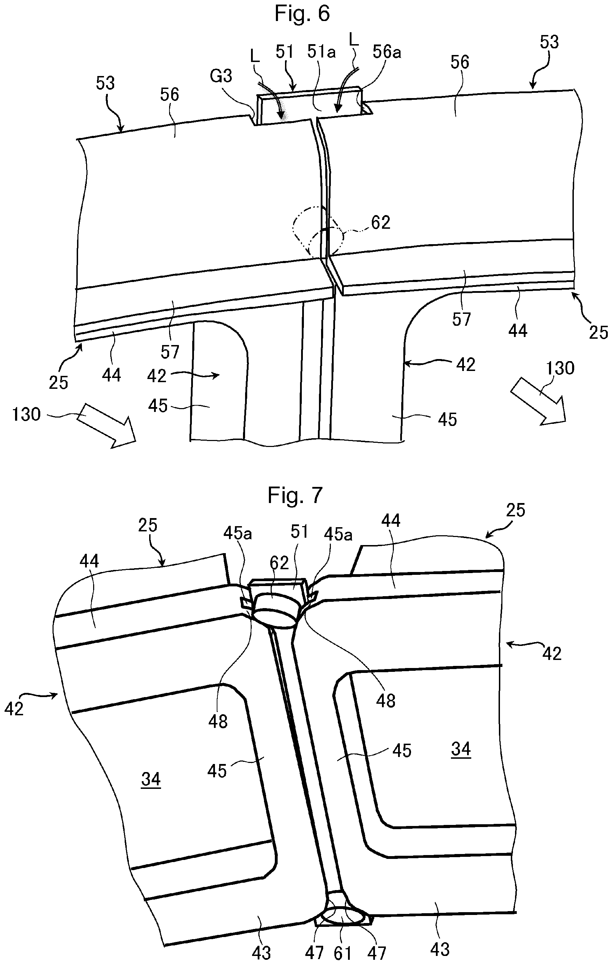

Next, the sealing structure of the gas turbine according to the first embodiment of the gas turbine will be described with reference to Figs. 3 through 7. Fig. 3 is a perspective view of the transition piece of the combustor and the sealing structure at the outlet side end portion of the transition piece constituting the gas turbine according to the first embodiment of the present invention. Fig. 4 is a cross-sectional view, as seen from the direction of the arrow line IV-IV, of the sealing structure at the outlet side end portions of the transition pieces of the gas turbine according to the first embodiment of the present invention shown in Fig. 3. Fig. 5 is a cross-sectional view, as seen from the direction of the arrow line V-V, of the sealing structure at the outlet side end portions of the transition pieces of the gas turbine of the first embodiment of the present invention shown in Fig. 3. Fig. 6 is a perspective view of part of frame corner portions of the transition pieces in the sealing structure at the outlet side end portions of the transition pieces of the gas turbine according to the first embodiment of the present invention. Fig. 7 is a perspective view, as seen from another direction, of the sealing structure at the outlet side end portions of the transition pieces of the gas turbine according to the first embodiment of the present invention with the inner circumferential seal members and the outer circumferential seal members removed.

In Fig. 3, each transition piece 25 is composed of a tubular main body portion 41 forming inside a flow path 34 for guiding the combustion gas 130 to the turbine inlet flow path 35, and a frame 42 surrounding the outer circumference of an outlet side end portion 41a of the tubular main body portion 41 (provided along the outer circumferential surface). The frame 42 may be an integral component formed integrally with the tubular main body portion 41, or it may be a separate component joined to the outlet side end portion 41a of the tubular main body portion 41 by welding or the like.

An inlet side end portion 41b of the tubular main body portion 41 is engaged with the downstream side end portion of the liner 21, and has a substantially circular flow path cross-section in correspondence with the cylindrical liner 21. The outlet side end portion 41a of the tubular main body portion 41 is connected to the turbine inlet portion 3a forming the turbine inlet flow path 35, and has a flow path cross-section with a shape obtained by dividing the annular shape into a plurality of sections in the circumferential direction in correspondence with the configuration of the turbine inlet flow path 35 having an annular flow path cross-section. In other words, the flow path cross-section of the outlet side end portion 41a of the tubular main body portion 41 is of an approximately rectangular (fan-shaped) configuration formed by an arc on the inner side in the radial direction, an arc on the outer side in the radial direction, and straight lines each connecting both end portions of both arcs. The flow path 34 of the tubular main body portion 41 is formed by connecting the flow path cross-section of the inlet side end portion 41b and the flow path cross-section of the outlet side end portion 41a by a smooth curve.

The frame 42 has an inner frame portion 43, outer frame portion 44, and a pair of side frame portions 45. The inner frame portion 43 is an arcuate portion arranged at a radial position corresponding to the radial inner edge side of the turbine inlet flow path 35 and extending in the circumferential direction. The outer frame portion 44 is an arcuate portion situated radially outside the inner frame portion 43 and extending in the circumferential direction. The pair of side frame portions 45 are linear portions each provided between both side end portions of the inner frame portion 43 in the circumferential direction and both side end portions of the outer frame portion 44 in the circumferential direction and extending in the radial direction. As shown in Figs. 3 and 4, in the opposing surfaces of the side frame portions 45 of the adjacent frames 42, there are each provided first sealing grooves 45a extending in the radial direction (the extending direction of the side frames).

To seal the gaps G1 between the side frame portions 45 of the adjacent frames 42, there are disposed side seal members 51. Each of the side seal members 51 is arranged so as to lie astride two first sealing grooves 45a of the adjacent side frame portions 45 and extends along the first sealing grooves 45a. The side seal member 51 is, for example, a member having an elongated flat plate shape, and has a downstream surface 51a on the turbine inlet portion 3a side.

As shown in Fig. 4, each side seal member 51 is pressed against the wall surface on the turbine inlet flow path 35 side of the pair of wall surfaces forming each first sealing groove 45a due to the difference in pressure between the combustion air 110 circulated in the space between the adjacent transition pieces 25 and the combustion gas 130 (which is of lower pressure than the combustion air 110) circulated from the flow path 34 in the transition piece 25 toward the turbine inlet flow path 35. In this way, the side seal member 51 is combined with the first sealing grooves 45a of the side frame portions 45, whereby it is possible to suppress the combustion air 110 circulating outside the transition piece 25 from flowing into the turbine inlet flow path 35. Further, between the side seal member 51 and the first sealing groove 45a of the side frame portion 45, there is provided a space or so-called "play," so that even in the case where the relative position of the adjacent first sealing grooves 45a undergoes a change due to thermal deformation and vibration of the transition piece 25, it is possible to suppress the combustion air 110 in the space 32 of the casing 28 containing the transition pieces 25 from flowing into the turbine inlet flow path 35 while suppressing deformation and wear of the side seal member 51.

Further, as shown in Figs. 3 and 5, in order to seal the gap G2 between the inner frame portion 43 and the turbine inlet portion 3a, there is arranged an inner circumferential seal member 52 so as to lie astride the inner frame portion 43 and the turbine inlet portion 3a. The inner circumferential seal member 52 extends along the inner frame portion 43. One side thereof is engaged with the inner frame portion 43, and the other side thereof is engaged with the inner portion in the radial direction of the turbine inlet portion 3a. In order to seal the gap G2 between the outer frame portion 44 and the turbine inlet portion 3a, there is arranged an outer circumferential seal member 53 so as to lie astride the outer frame portion 44 and the turbine inlet portion 3a. The outer circumferential seal member 53 extends along the outer frame portion 44. One side thereof is engaged with the outer frame portion 44, and the other side thereof is engaged with the outer portion in the radial direction of the turbine inlet portion 3a.

More specifically, as shown in Fig. 5, in inlet side end surfaces of the turbine inlet portion 3a opposing the downstream side end surfaces of the inner frame portion 43 and the outer frame portion 44 of the frame 42, there are each provided second sealing grooves 3b.

The inner circumferential seal member 52 and the outer circumferential seal member 53 are each composed of first engagement portions 56 formed in a U-shaped cross-section and having first leg portions 56a and second leg portions 56b, and second engagement portions 57 with a linear cross-section bent at substantially right angles from the second leg portions 56b of the first engagement portions 56 and extending outwardly. The inner circumferential seal member 52 and the outer circumferential seal member 53 are formed, for example, of a material which is of high wear resistance at high temperature and flexible.

In the inner circumferential seal member 52, the first leg portion 56a and the second leg portion 56b of the first engagement portion 56 hold therebetween the upstream side end surface and the downstream side end surface of the inner frame portion 43, whereby the first engagement portion 56 is brought into close contact with the inner frame portion 43, and the second engagement portion 57 is inserted into the second sealing groove 3b of the turbine inlet portion 3a. The second engagement portion 57 of the inner circumferential seal member 52 is disposed with a gap inside the second sealing groove 3b of the turbine inlet portion 3a, whereby even if the relative position of the transition piece 25 and the turbine inlet portion 3a undergoes a change due to thermal deformation or the like, it is possible to suppress the combustion air 110 flowing outside the transition piece 25 from flowing into the turbine inlet flow path 35 while preventing interference therebetween. Further, the inner circumferential seal member 52 is formed such that the first engagement portion 56 with the U-shaped cross-section holds the inner frame portion 43, so that even if the inner circumferential seal member 52 itself and the inner frame portion 43 are thermally deformed, it is possible to maintain the close contact therebetween.

In the outer circumferential seal member 53, the first leg portion 56a and the second leg portion 56b of the first engagement portion 56 hold therebetween the upstream side end surface and the downstream side end surface of the outer frame portion 44, whereby the first engagement portion 56 is brought into close contact with the outer frame portion 44, and the second engagement portion 57 is inserted into the second sealing groove 3b of the turbine inlet portion 3a. The second engagement portion 57 of the outer circumferential seal member 53 is disposed with a gap inside the second sealing groove 3b of the turbine inlet portion 3a, whereby even if the relative position of the transition piece 25 and the turbine inlet portion 3a undergoes a change due to thermal deformation, it is possible to suppress the combustion air 110 in the space of the casing 28 from flowing into the turbine inlet flow path 35 while preventing interference therebetween. Like the inner circumferential seal member 52, the outer circumferential seal member 53 is formed such that the first engagement portion 56 with the U-shaped cross-section holds the outer frame portion 44, so that even if the outer circumferential seal member 53 itself and the outer frame portion 44 are thermally deformed, it is possible to maintain the close contact therebetween.

The inner frame portion 43 and the outer frame portion 44 of the frame 42 with which the inner circumferential seal member 52 and the outer circumferential seal member 53 come into contact are also formed of a material of high wear resistance, whereby it is possible to suppress wear due to thermal deformation and vibration.

In the inner circumferential seal member 52, the outer circumferential seal member 53, and the side seal member 51, in order to avoid mutual interference even in the case where the relative position between the adjacent transition pieces 25 and the relative position of the transition pieces 25 and the turbine inlet portion 3a undergo a change due to thermal deformation or vibration, the sealing positions are mutually offset without the members being connected to each other. More specifically, as shown in Fig. 5, the inner circumferential seal member 52 and the outer circumferential seal member 53 are respectively held in contact with the downstream side end surfaces of the inner frame portion 43 and the outer frame portion 44 of the frame 42 of the transition piece 25. On the other hand, as shown in Fig. 4, the side seal member 51 is held in contact with the first sealing grooves 45a provided in the side frame portions 45 of the frames 42. That is, the sealing positions of the inner circumferential seal member 52 and the outer circumferential seal member 53 are relatively offset to the turbine inlet portion 3a side from the sealing position of the side seal member 51.

The inner circumferential seal member 52 and the outer circumferential seal member 53 are formed such that the side seal member 51 can be displaced in accordance with the displacements of the adjacent side frame portions 45 without interfering with the inner circumferential seal member 52 and the outer circumferential seal member 53. For example, as shown in Fig. 6, the outer circumferential seal member 53 is provided with a cutout 56a in the region where it is combined with the side seal member 51 (region where the members 51 and 53 cross). As a result, there is formed a space G3 allowing the side seal member 51 to be displaced with respect to the two outer circumferential seal members 53 adjacent to each other. As in the case of the outer circumferential seal member 53, the inner circumferential seal member 52 also exhibits a structure forming a space G3 allowing displacement of the side seal member 51.

In this structure, part of the combustion air flowing outside the transition pieces 25 flows, as leakage air L, into the first engagement portion 56 with the U-shaped cross-section of the outer circumferential seal member 53 from the space G3 provided in the region where the side seal member 51 and the outer circumferential seal member 53 are combined (crossed) with each other. Similarly, leakage air L flows into the first engagement portion 56 with the U-shaped cross-section of the inner circumferential seal member 52 from the space G3 provided in the region where the side seal member 51 and the inner circumferential seal member 52 are combined (crossed) with each other.

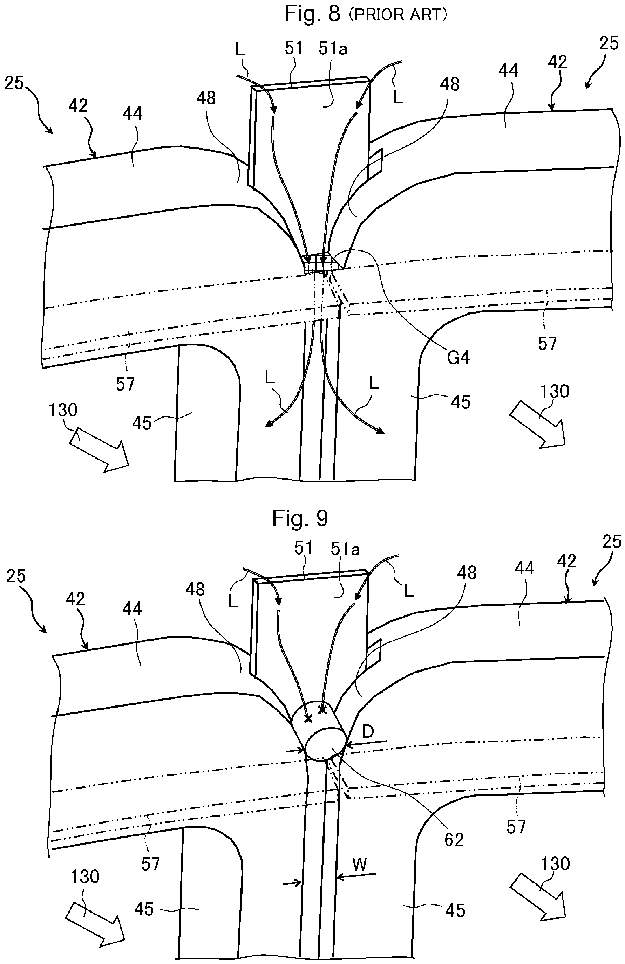

In a conventional sealing structure in which the connection portion between the transition piece 25 and the turbine inlet portion 3a is sealed, the same configuration as that of the above-described sealing structure is adopted, and solely the inner circumferential seal member 52, the outer circumferential seal member 53, and the pair of side seal members 51 are used as the sealing members. Thus, as described in detail below, the leakage air L having flowed into the first engagement portions 56 from the space G3 unfortunately flows into the turbine inlet flow path 35 via the gap between the corner portions of the inner frame portions 43 and the side frame portions 45 of the adjacent frames 42, and via a gap G4 (see Fig. 8 described later) between the corner portions of the outer frame portions 44 and the side frame portions 45.

In view of this, as shown in Figs. 3 and 7, in the present embodiment, a first obstacle 61 is arranged so as to lie astride first corner portions 47 of the inner frame portions 43 and the side frame portions 45 of the adjacent frames 42 while being in contact with the side seal member 51 at the side of the turbine inlet portion 3a. Further, a second obstacle 62 is arranged so as to lie astride second corner portions 48 of the outer frame portions 44 and the side frame portions 45 of the adjacent frames 42 while being in contact with the side seal member 51 at the side of the turbine inlet portion 3a. As a result, inflow of the leakage air L into the turbine inlet flow path 35 from the gaps G4 (see Fig. 8 described later) between the corner portions 47 and 48 of the adjacent frames 42 in the conventional sealing structure is suppressed.

Next, sealing performance of the sealing structure according to the first embodiment of the gas turbine of the present invention will be described with reference to Figs. 6 through 9 while comparing it with that of the conventional sealing structure. Fig. 8 is an explanatory view illustrating leakage in the conventional sealing structure at the outlet side end portions of the transition pieces. Fig. 9 is an explanatory view illustrating the operation of the sealing structure at the outlet side end portions of the transition pieces of the gas turbine according to the first embodiment of the present invention with the inner circumferential seal members and the outer circumferential seal members removed. In Fig. 8, the second engagement portions of the outer circumferential seal members are indicated by a chain double-dashed line for the illustration of the leakage air.

As in the sealing structure according to the first embodiment shown in Fig. 6, in the conventional sealing structure in which the connection portion between the transition piece 25 and the turbine inlet portion 3a is sealed, the leakage air L flows into the first engagement portions 56 of the outer circumferential seal members 53 from the space G3 provided in the region where the side seal member 51 and the outer circumferential seal members 53 are combined with each other (region where the members 51 and 53 cross). Similarly, the leakage air L flows into the first engagement portions 56 of the inner circumferential seal members 52 from the space G3 provided in the region where the side seal member 51 and the inner circumferential seal members 52 are combined with each other (where the members 51 and 52 cross).

As shown in Fig. 8, inside the first engagement portions 56 (not shown in Fig. 8) of the outer circumferential seal members 53, there is formed a gap G4 in the area surrounded by the opposing surfaces of the side frame portions 45 of the adjacent frames 42, the downstream surface 51a of the side seal member 51, and the second engagement portions 57 (the chain double-dashed line) of the outer circumferential seal members 53. In the conventional sealing structure, no sealing member is arranged in this gap G4, so that the leakage air L having flowed into the first engagement portions 56 of the outer circumferential seal members 53 from the space G3 shown in Fig. 6 flows into the turbine inlet flow path 35 via the gap G4 between the second corner portions 48 of the adjacent frames 42. A gap G4 as shown in Fig. 8 is also formed between the first corner portions 47 of the side frame portions 45 and the inner frame portions 43. Thus, the leakage air L having flowed into the first engagement portions 56 of the inner circumferential seal members 52 from the space G3 flows into the turbine inlet flow path 35 via the gap G4 between the first corner portions 47 of the adjacent frames 42.

Conventionally, no special emphasis has been placed on the leakage amount from the gaps G4 between the corner portions 47 and 48 of the adjacent frames 42 since it is relatively small as compared with the leakage amount from the gap G1 (see Fig. 4) between the adjacent side frame portions 45, and the leakage amount from the gap G2 (see Fig. 5) between the inner frame portion 43 or the outer frame portion 44 and the turbine inlet portion 3a. In recent years, however, there is a demand for a further reduction in the leakage air from the viewpoint of improving the energy efficiency and the combustion performance of the gas turbine.

As shown in Fig. 9, in the present embodiment, the second obstacle 62 is arranged between the second corner portions 48 of the adjacent frames 42. Similarly, the first obstacle 61 is arranged between the first corner portions 47 of the adjacent frames 42 (see also Fig. 7). Thus, the first obstacle 61 and the second obstacle 62 respectively close the gaps G4 between the first corner portions 47 and the gaps G4 (see Fig. 8) between the second corner portions 48 of the adjacent frames 42. Accordingly, the leakage air L having flowed from the space G3 shown in Fig. 6 into the first engagement portions 56 of the outer circumferential seal members 53 and the inner circumferential seal members 52 is suppressed from flowing into the turbine inlet flow path 35 by the first obstacle 61 and the second obstacle 62. As a result, it is possible to reduce the leakage amount of the combustion air 110 at the connection portion between the outlet end portions 25a of the transition pieces 25 of the combustors 2 and the turbine inlet portion 3a.

As shown in Figs. 7 and 9, in the present embodiment, the first corner portions 47 and the second corner portions 48 of the frame 42 are formed, for example, in a rounded shape with an arcuate cross-section, that is, as convex fillets. The first obstacle 61 and the second obstacle 62 are formed, for example, in a cylindrical shape, and are each arranged so as to extend in the thickness direction of the frame 42. In such a structure, the first obstacle 61 and the second obstacle 62 easily contact with the first corner portions 47 and the second corner portions 48 of the frames 42, respectively. Even if the relative position between the frames 42 undergoes a change due to thermal deformation or the like, the contact between the first corner portions 47 of the frames 42 and the first obstacle 61 and the contact between the second corner portions 48 and the second obstacle 62 are easily maintained, making it possible to maintain the sealing performance of the first obstacle 61 and the second obstacle 62.

Further, as shown in Fig. 9, in the present embodiment, the outer diameters D of the cylindrical portions of the first obstacle 61 and the second obstacle 62 are set to be larger than the distance W between the adjacent side frame portions 45. As a result, it is possible to prevent the first obstacle 61 and the second obstacle 62 from coming off through the gaps between the side frame portions 45 of the frames 42. Further, the leakage air L (the combustion air 110) having flowed into the first engagement portions 56 presses the first obstacle 61 against two first corner portions 47 and the second obstacle 62 against two second corner portions 48 of the adjacent side frame portions 45, so that the gaps G4 between the first corner portions 47 and the second corner portions 48 of the adjacent side frame portions 45 are reliably closed, making it possible to prevent the leakage air L from flowing into the turbine inlet flow path 35.

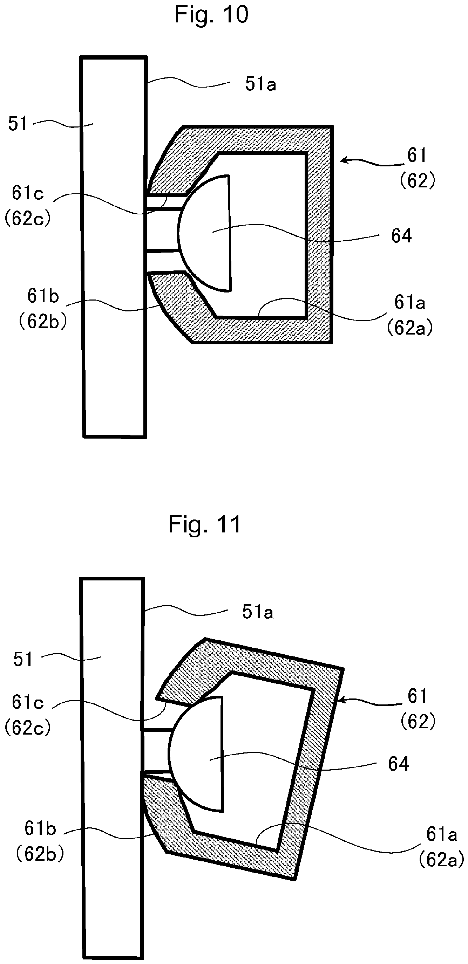

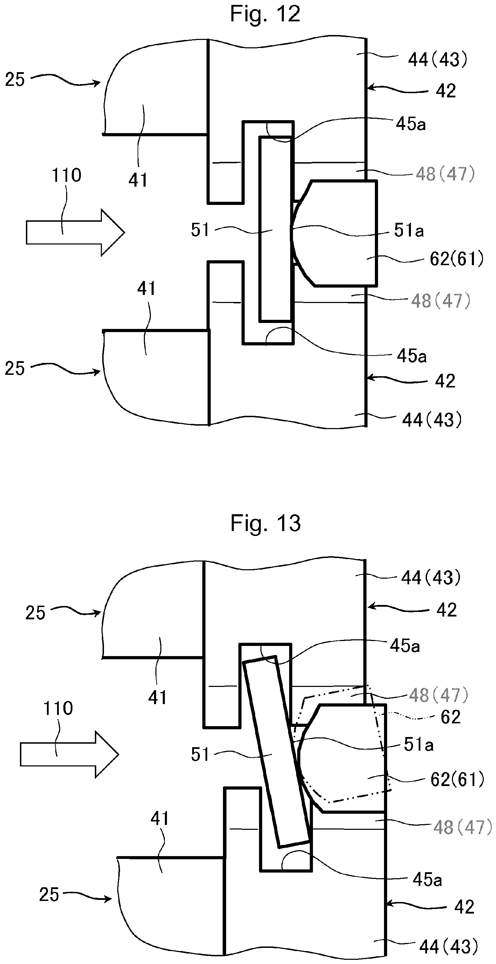

Next, structures of the first obstacle and the second obstacle constituting parts of the sealing structure at the outlet side end portion of the transition piece in the gas turbine according to the first embodiment of the present invention will be described with reference to Figs. 10 through 13. Fig. 10 is a cross-sectional view illustrating an example of the obstacle constituting a part of the sealing structure at the outlet side end portions of the transition pieces in the gas turbine according to the first embodiment of the present invention. Fig. 11 is a cross-sectional view illustrating how the obstacle shown in Fig. 10 is joined to the side seal member. Fig. 12 is a diagram illustrating the sealing structure of the gas turbine according to the first embodiment of the present invention shown in Fig. 9 as seen from the outer circumferential side. Fig. 13 is an explanatory view illustrating positional change of the sealing member at the time of relative displacement between the transition pieces in the sealing structure of the gas turbine according to the first embodiment of the present invention shown in Fig. 12.

The first obstacle 61 and the second obstacle 62 are each configured to be tiltable relative to the downstream surface 51a of the side seal member 51 while being in contact with the downstream surface 51a at one point. More specifically, as shown in Fig. 10, the first obstacle 61 and the second obstacle 62 are each joined to the side seal member 51 by pins 64 provided on the side seal member 51. The first obstacle 61 and the second obstacle 62 each have accommodation portions 61a and 62a holding the pins 64 therein. The first obstacle 61 and the second obstacle 62 each have convex curved surface portions 61b and 62b at a portion opposite the downstream surface 51a of the side seal member 51. The curved surface portions 61b and 62b are each provided with insertion holes 61c and 62c through which the pins 64 are inserted. The insertion holes 61c and 62c are each provided in a size large enough to have a gap with respect to the pins 64. Thus, as shown in Fig. 11, the first obstacle 61 and the second obstacle 62 each have freedom to tilt relative to the side seal member 51. That is, the first obstacle 61 and the second obstacle 62 each can freely change the relative angle with respect to the downstream surface 51a of the side seal member 51 while being in contact with the downstream surface 51a at one point.

As shown in Fig. 12, in the present embodiment, the side seal member 51 is combined with the first sealing grooves 45a provided in the frames 42 of the transition pieces 25, whereby the flow path between them becomes complicated. Thus, the flow of the combustion air 110 is hindered, a sealing performance is attained. In addition, the second obstacle 62 is arranged in the gap between the second corner portions 48 of the adjacent frames 42, whereby the flow path between them becomes complicated. Thus, the flow of the combustion air 110 is hindered, a sealing performance is attained. In such sealing structure, as shown in Fig. 13, in the case where the relative position between the adjacent transition pieces 25 undergo a change due to thermal deformation and vibration, the side seal member 51 arranged astride two first sealing grooves 45a is changed in orientation in accordance with relative displacement between the two first sealing grooves 45a of the frames 42.

Unlike the present embodiment, in the case where the first obstacle 61 and the second obstacle 62 are fixed to the side seal member 51, the first obstacle 61 and the second obstacle 62 undergo a relative inclination with respect to the frame 42 of the transition piece 25 in accordance with the change in the orientation of the side seal member 51 as indicated by the chain double-dashed chain line in Fig. 13. As a result, there are exerted forces between the first and the second obstacle 61, 62 and the side seal member 51, between the first and the second obstacle 61, 62 and the frames 42, and between the side seal member 51 and the frames 42, with the result that stress is caused in each of the components. In this way, when the first obstacle 61 and the second obstacle 62 are fixed to the side seal member 51, stress is repeatedly caused in the side seal member 51, the first obstacle 61, and the second obstacle 62 due to thermal deformation and vibration. Further, the components 51, 61, and 62 are exposed to a high temperature environment, so that there is a fear of thermal fatigue being generated in the material to cause fracture and wear.

In contrast, in the present embodiment, the first obstacle 61 and the second obstacle 62 each have freedom to tilt relative to the side seal member 51 while being in contact with the side seal member 51 at one point. Thus, as indicated by the solid line in Fig. 13, the first obstacle 61 and the second obstacle 62 are kept in contact with the side seal member 51 by flexibly changing their position with respect to a change in the relative position of the frames 42 of the transition pieces 25 and the side seal member 51. it is possible to maintain the sealing performance.

As described above, in the gas turbine according to the first embodiment of the present invention, the first obstacle 61 and the second obstacle 62 are respectively arranged in the gap G4 between the first corner portions 47 and in the gap G4 between the second corner portions 48 of the frames 42 of the adjacent transition pieces 25 while being in contact with the side seal member 51. Even if a relative displacement is caused between the components of the combustors 2 and the turbine 3, it is possible to suppress leakage of the combustion air 110 into the turbine inlet flow path 35 from the gap G4 between the first corner portions 47 of the frames 42 and the gap G4 between the second corner portions 48. Thus, it is possible to enhance the sealing performance at the connection portion between the outlet end portions 25a of the transition pieces 25 of the combustors 2 and the turbine inlet portion 3a. As a result, the energy efficiency and the combustion performance of the gas turbine are improved.

Further, in the present embodiment, the first obstacle 61 and the second obstacle 62 have freedom to tilt relative to the downstream surface 51a of the side seal member 51 while in contact with the downstream surface 51a at one point. Even if the relative position of the side seal member 51 and the transition pieces 25 undergo a change due to thermal deformation or the like, the relative angles of the first obstacle 61 and the second obstacle 62 with respect to the side seal member 51 are changed in correspondence therewith. Thus, the first obstacle 61 and the second obstacle 62 can be flexibly displaced following the change in the relative position of the side seal member 51 and the transition pieces 25. Even if the transition pieces 25, etc. undergo a relative displacement, no excessive force acts on the joining between the first obstacle 61 and the side seal member 51 and between the second obstacle 62 and the side seal member 51, making it possible to suppress fatigue fracture of the first obstacle 61, the second obstacle 62, and the side seal member in a high temperature environment.

Further, in the present embodiment, the first corner portion 47 and the second corner portion 48 of the frame 42 of the transition piece 25 are each formed in a rounded shape with an arcuate cross-section (convex fillet), and the first obstacle 61 and the second obstacle 62 are formed in a cylindrical shape, so that the first obstacle 61 and the second obstacle 62 are held in line contact with the first corner portions 47 and the second corner portions 48 of the frames 42, respectively. Thus, even if the adjacent transition pieces 25 are relatively displaced in the axial direction of the gas turbine due to the thermal deformation or the like, the contact is maintained by the arcuate surfaces of the corner portions 47 and 48 of the frames 42 and the arcuate surfaces of the obstacles 61 and 62, and cavities are hardly generated between the obstacles 61 and 62 and the corner portions 47 and 48 of the frames 42. Accordingly, it is possible to further suppress leakage from the gap G4 between the first corner portions 47 and the gap G4 between the second corner portions 48 of the frames 42.

Further, in the present embodiment, the outer diameter D of the cylindrical portion of the first obstacle 61 and the second obstacle 62 is set to be larger than the distance W between the side frame portions 45 of the adjacent frames 42, so that it is possible to prevent the first obstacle 61 and the second obstacle 62 from coming off between the first corner portions 47 and between the second corner portions 48 of the frames 42. Further, it is possible to reliably close the gap G4 between the first corner portions 47 and the gap G4 between the second corner portions 48, so that it is possible to seal out the inflow of the leakage air L into the turbine inlet flow path 35.

Further, in the present embodiment, the first obstacle 61 and the second obstacle 62 are each joined to the side seal member 51 by the pin 64, so that it is possible to attain a configuration in which the first obstacle 61 and the second obstacle 62 are tiltable relative to the side seal member 51 with a simple structure.

### [Modification of the First Embodiment]

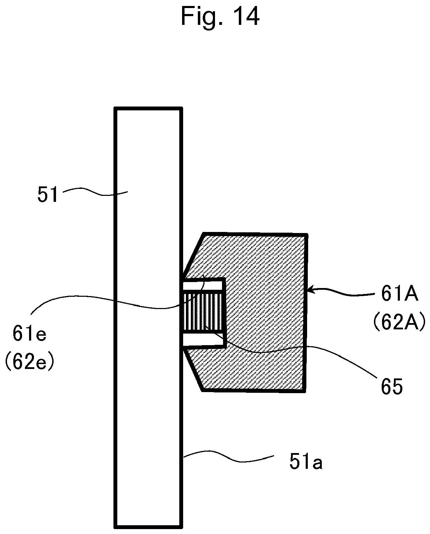

Next, a gas turbine according to a modification of the first embodiment of the present invention will be described with reference to Fig. 14. Fig. 14 is a cross-sectional view illustrating an obstacle constituting a part of a sealing structure at outlet side end portions of transition pieces in the gas turbine according to the modification of the first embodiment of the present invention. In Fig. 14, the components that are the same as those in Figs. 1 through 13 are indicated by the same reference numerals, and a description thereof will be left out.

In the first embodiment, the first obstacle 61 and the second obstacle 62 are each joined to the side seal member 51 by the pins 64, whereas, in the modification of the first embodiment of the present invention shown in Fig. 14, the first obstacle 61A and the second obstacle 62A are each joined to the side seal member 51 by spring members 65. More specifically, the first obstacle 61A and the second obstacle 62A respectively have recesses 61e and 62e at the portions where they face the downstream surface 51a of the side seal member 51. Each of the recesses 61e and 62e accommodates a spring member 65. One end portion of the spring member 65 is fixed to the downstream surface 51a of the side seal member 51, and the other end portion thereof is fixed to the bottom portion of the recess 61e, 62e of the first and second obstacle 61, 62. Thus, if the relative position of the side seal member 51 and the adjacent transition pieces 25 undergoes a change, the first obstacle 61A and the second obstacle 62A are brought into a state in which they are tilted relative to the side seal member 51 while maintaining the state in which they are in contact with the side seal member 51 through deformation of the spring member 65. That is, as in the first embodiment, the first obstacle 61A and the second obstacle 62A in this modification are also configured to be tiltable relative to the side seal member 51 while being in contact with the side seal member 51.

In another modification, the first obstacle and the second obstacle can be formed of a material exhibiting flexibility. For example, the first obstacle and the second obstacle themselves shown in Fig. 7 can be formed of a spring member. In this case, when the relative position of the side seal member 51 and the adjacent transition pieces 25 undergoes a change, the first obstacle and the second obstacle themselves are deformed, whereby, as in the first embodiment, the contact with the side seal member 51 is maintained, making it possible to maintain the sealing performance.

In the gas turbine of the modification of the first embodiment of the present invention described above, it is possible to attain the same effect as that of the first embodiment.

### [Other Embodiments]

The present invention is not restricted to the above-described first embodiment and the modification thereof but includes various modifications. The above embodiment, which has been described in detail in order to facilitate the understanding of the present invention, is not always restricted to a structure equipped with all the components described above. For example, a part of the structure of a certain embodiment can be replaced by the structure of another embodiment. Further, it is also possible to add the structure of another embodiment to the structure of a certain embodiment. Further, with respect to a part of the structure of each embodiment, addition, deletion, or replacement of another structure is possible.

For example, while in the first embodiment described above the compressor 1, the turbine 3, and the generator 6 are connected by a single drive shaft 4, it is also possible to divide the turbine into one for driving the compressor 1, and one for driving the generator 6, providing each of them with a drive shaft.

Further, while in the first embodiment described above the gas turbine drives the generator 6, it is also possible to drive some other rotary body instead of the generator 6.

Further, in the sealing structure of the first embodiment described above, the inner circumferential seal member 52 and the outer circumferential seal member 53 have the first engagement portions 56 with a U-shaped cross-section, with the inner frame portion 43 and the outer frame portion 44 being held by the first engagement portions 56. It is also possible, however, to provide a sealing structure in which the inner circumferential seal member and the outer circumferential seal member are each secured to the inner frame portion 43 and the outer frame portion 44 by welding, bolts or the like. Further, it is also possible to provide a sealing structure in which an inner circumferential seal member and an outer circumferential seal member are provided with recesses or protrusions, and an inner frame portion 43 and an outer frame portion 44 are provided with protrusions or recesses, and the recesses and the protrusions are combined with each other. ,

Further, in the first embodiment described above, the first obstacle 61 and the second obstacle 62 are configured to be tiltable relative to and to be in point contact with the side seal member 51. It is also possible, however, for the first obstacle 61 and the second obstacle 62 to be configured to be tiltable relative to and to be in line contact with the side seal member 51. In this case, it is also possible to attain the same effect as that of the first embodiment.

## Claims

1. A gas turbine having a sealing structure at a connection portion between transition pieces (25) of a plurality of gas turbine combustors (2) arranged in an annular fashion and a turbine inlet portion (3a) forming a turbine inlet flow path (35) of an annular cross-section, wherein
each of the transition pieces (25) has a frame (42) surrounding an outer circumference at an outlet side end portion thereof,
the frame (42) includes
an inner frame portion (43) extending in a circumferential direction,
an outer frame portion (44) situated radially outside the inner frame portion (43), the outer frame portion (44) extending in the circumferential direction, and
a pair of side frame portions (45) each provided between both side end portions of the inner frame portion (43) in the circumferential direction and both side end portions of the outer frame portion (44) in the circumferential direction, the pair of side frame portions (45) extending in the radial direction,
the sealing structure includes
an inner circumferential seal member (52) extending along the inner frame portion (43), the inner circumferential seal member (52) being configured to seal a gap between the inner frame portion (43) and the turbine inlet portion (3a);
an outer circumferential seal member (53) extending along the outer frame portion (44), the outer circumferential seal member (53) being configured to seal a gap between the outer frame portion (44) and the turbine inlet portion (3a); and
a side seal member (51) extending along a side frame portion (45) of the pair of side frame portions, the side seal member (51) being configured to seal a gap between side frame portions (45) of adjacent frames (42) among the frames,
**characterized in that** the sealing structure further includes
a first obstacle (61) arranged in a gap between first corner portions (47) of the inner frame portions (43) and the side frame portions (45) of the adjacent frames (42); and
a second obstacle (62) arranged in a gap between second corner portions (48) of the outer frame portions (44) and the side frame portions (45) of the adjacent frames (42), the first obstacle (61) and the second obstacle (62) being each in contact with the side seal member (51) at a side of the turbine inlet portion (3a).

2. The gas turbine according to claim 1, wherein each of the first obstacle (61) and the second obstacle (62) is configured to be tiltable relative to the side seal member (51) while being in point contact or line contact with the side seal member (51).

3. The gas turbine according to claim 2, wherein each of the first obstacle (61) and the second obstacle (62) is joined to the side seal member (51) by a pin (64).

4. The gas turbine according to claim 2, wherein each of the first obstacle (61) and the second obstacle (62) is joined to the side seal member (51) via a spring member (65) .

5. The gas turbine according to claim 2, wherein each of the first obstacle (61) and the second obstacle (62) is a spring member tiltable relative to the side seal member (51) .

6. The gas turbine according to any one of claims 1 through 5, wherein
the first obstacle (61) is arranged so as to lie astride between the first corner portions (47) of the adjacent frames (42), and
the second obstacle (62) is arranged so as to lie astride between the second corner portions (48) of the adjacent frames (42).

7. The gas turbine according to any one of claims 1 through 5, wherein
each of the first corner portions (47) and each of the second corner portions (48) of the frame (42) are of a rounded shape with an arcuate cross-section, and
the first obstacle (61) and the second obstacle (62) are each of a cylindrical shape extending in a thickness direction of the frame (42).

8. The gas turbine according to claim 7, wherein outer diameters (D) of first obstacle (61) and the second obstacle (62) are each set to be larger than a distance (W) between the side frame portions (45) of the adjacent frames (42) .
